# DEMANDE DE BREVET EUROPEEN

(11) **EP 1 450 283 A1**
(43) Date de publication de la demande: **25.08.2004**
(21) Numéro de dépôt: 03292642.0
(22) Date de dépôt: 22.10.2003
(51) Int. Cl.: G06F 17/60, G06F 19/00

(54) **Système et procédé de gestion dynamique de supports de relations avec une clientèle**

(30) Priorité: 22.10.2002 FR 0213165
(71) Demandeur: FRANCE TELECOM, 75015 Paris (FR)
(72) Inventeur: Richard, Jean-Pierre, 93300 Aubervilliers (FR); Lunardelli, Michel, 77420 Champs sur Marne (FR); Manson, Patrice, 14320 St. Martin de Fontenay (FR); Le Corre, Hervé, 14930 Eterville (FR)
(74) Mandataire: Dossmann, Gérard

(57) **Abrégé**

Système de gestion dynamique de supports de relations avec une clientèle, comprenant au moins une annonce, un appareil 3 dont dispose un utilisateur de façon que s'il est intéressé par l'annonce ou par son contenu, ledit utilisateur actionne ledit appareil pour marquer son intérêt, ledit appareil 3 étant apte à émettre un message de signalement MS, et un dispositif de gestion apte à communiquer avec l'appareil de l'utilisateur pour transmettre audit appareil une adresse correspondant à ladite annonce à réception du message de signalement MS .

## Description

La présente invention relève du domaine de la gestion dynamique de supports de relations avec une clientèle et s'intéresse à toutes les phases qui interviennent entre l'envoi d'une annonce quelconque destinée à être mise à la disposition du public et la réaction immédiate ou différée d'une personne intéressée par rapport à ladite annonce. En d'autres termes, l'invention propose un moyen bidirectionnel de relations avec un utilisateur, notamment pour établir une interactivité dans le domaine publicitaire.

On connaît, dans l'état de l'art, les panneaux de publicité supportant une affiche en papier à destination du public. On connaît également des panneaux équipés de plusieurs affiches montrées séquentiellement au public, notamment par un mécanisme d'enroulage et de déroulage. Toutefois, ces mécanismes sont statiques et monodirectionnels en ce sens que la publicité s'adresse à l'utilisateur. Mais l'utilisateur ne peut réagir à cette publicité, et il ne peut donc être tenu compte de sa réaction.

L'invention propose d'établir un échange en temps réel entre un utilisateur potentiel et un message ou une annonce publiée sur un support publicitaire, tel qu'un panneau dans la rue, un écran, une page de magazine, un site Internet ou encore diffusé par une borne d'émission sonore.

Le système de gestion dynamique de support de relation avec une clientèle, selon un aspect de l'invention, comprend au moins une annonce, un appareil dont dispose un utilisateur de façon que s'il est intéressé par l'annonce ou par son contenu, ledit utilisateur actionne ledit appareil pour marquer son intérêt, ledit appareil étant apte à émettre un message de signalement, et un dispositif de gestion apte à communiquer avec l'appareil de l'utilisateur pour transmettre audit appareil une adresse correspondant à l'annonce à réception du message de signalement.

L'annonce peut être de type visuel sur un support-papier ou un écran ou de type sonore, diffusée par un haut-parleur. L'adresse peut être une adresse électronique, par exemple une adresse Internet.

Dans un mode de réalisation de l'invention, le dispositif de gestion comprend un élément d'émission-réception associé à l'annonce et apte à communiquer avec l'appareil de l'utilisateur, et un centre de gestion relié à l'élément d'émission-réception. Le centre de gestion peut être apte à commander l'élément d'émission-réception. Ainsi, une pluralité d'éléments d'émission-réception peuvent être commandés à distance.

Dans un mode de réalisation de l'invention, l'élément d'émission-réception comprend un moyen pour recevoir un message de signalement émis par l'appareil de l'utilisateur, un moyen pour émettre un message contenant une requête d'identification de l'appareil de l'utilisateur, et un moyen pour recevoir un message d'identification émis par l'appareil de l'utilisateur. On peut ainsi établir des statistiques relatives aux appareils des utilisateurs et à l'utilisateur.

Dans un mode de réalisation de l'invention, l'élément d'émission-réception comprend un moyen pour émettre un message contenant un identifiant de l'annonce et un identifiant d'un support de l'annonce. A réception dudit message, l'appareil de l'utilisateur peut alors stocker l'identifiant de l'annonce permettant ainsi de retrouver des informations relatives à l'annonce de façon aisée. On favorise une connexion ultérieure à un dispositif contenant de telles informations.

Avantageusement, l'élément d'émission-réception comprend un moyen pour commander un support d'annonce et afficher une annonce déterminée. L'annonce peut être déterminée en fonction de l'utilisateur ou de l'appareil de l'utilisateur.

Avantageusement, le centre de gestion comprend un moyen pour recevoir un message émis par l'élément d'émission-réception contenant un identifiant de l'appareil de l'utilisateur et un identifiant de l'annonce, et un moyen pour envoyer à l'appareil de l'utilisateur un message relatif à l'annonce. Le centre de gestion peut comprendre un moyen de gestion de campagnes de publication d'annonce.

De préférence, le centre de gestion comprend un moyen de commande d'une pluralité d'éléments d'émission-réception.

L'invention propose également un procédé de gestion dynamique de supports de relations avec une clientèle, dans lequel un utilisateur intéressé par une annonce ou par son contenu actionne un appareil dont il dispose, pour marquer son intérêt, ledit appareil émet un message de signalement, à réception du message de signalement, un dispositif de gestion d'annonce transmet à l'appareil de l'utilisateur une adresse correspondant à l'annonce. L'annonce peut être vue ou entendue par de l'utilisateur.

Dans un mode de réalisation de l'invention, de l'utilisateur intègre le dispositif de gestion dans le « piconet » de son appareil, ledit dispositif de gestion détecte son intégration dans le « piconet » de l'appareil de l'utilisateur et se fait transmettre un identifiant dudit appareil. On entend par piconet un réseau en commutation de paquets et/ou de circuits formé par plusieurs équipements utilisant le même canal logique, par exemple un canal "Bluetooth". "Bluetooth" est une norme de technologie de connexion par micro-ondes entre appareils portables, ordinateurs, téléphones, etc.

Dans un mode de réalisation de l'invention, suite à son actionnement, l'appareil de l'utilisateur émet un message, ledit message est reçu par le dispositif de gestion, le dispositif de gestion émet un message contenant une requête d'identification, et à réception du message, l'appareil de l'utilisateur émet un message contenant un identifiant dudit appareil.

Le dispositif de gestion peut recevoir l'identifiant dudit appareil et l'associer à un identifiant de l'annonce. Le dispositif de gestion peut associer l'identifiant dudit appareil à l'adresse d'un site correspondant à l'annonce. Le dispositif de gestion peut émettre à destination de l'appareil de l'utilisateur un message contenant l'adresse d'un site correspondant à ladite annonce.

L'annonce peut être présentée sur un écran graphique multimédia, un panneau à texte défilant, un système de communication interactif, une affiche papier, une vitrine, un magazine, etc. L'annonce peut également être diffusée de façon sonore. L'appareil de l'utilisateur peut être un combiné de téléphonie mobile, un organiseur, un ordinateur portable, etc. En général, l'appareil de l'utilisateur est équipé d'un moyen de radiocommunication. L'appareil de l'utilisateur peut également être équipé d'un moyen de communication à distance pour transférer des données, par exemple de type « Bluetooth ».

L'invention permet à un annonceur de communiquer avec un utilisateur potentiel qui marque un intérêt pour une annonce.

L'invention sera mieux comprise à l'étude de la description détaillée de quelques modes de réalisation pris à titre d'exemples nullement limitatifs et illustrés par les dessins annexés, sur lesquels :
- la figure 1 est une vue schématique du système selon un mode de réalisation ;
- la figure 2 est une vue schématique du centre de gestion de service illustré sur la figure 1 ;
- la figure 3 est une vue schématique du support de communication illustré sur la figure 1 ; et
- la figure 4 est une vue schématique d'un système selon un autre mode de réalisation de l'invention.

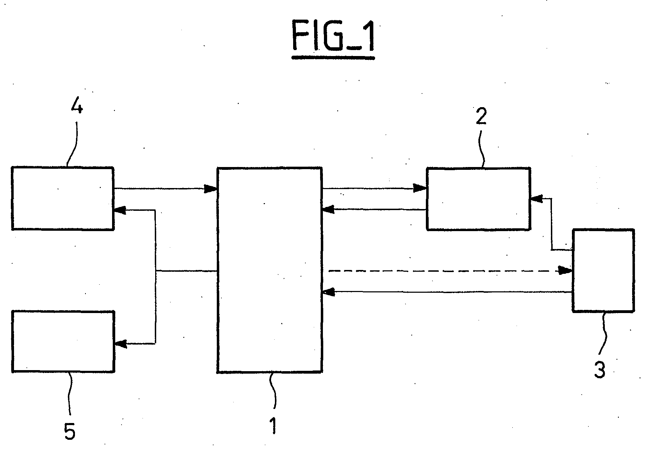

Comme on peut le voir sur la figure 1, le système comprend un centre de gestion de service 1, un support de communication 2, par exemple un panneau d'affichage, une pluralité d'appareils 3, dont un seul est représenté, appartenant à des utilisateurs ou à des utilisateurs potentiels, un émetteur d'ordres d'annonce 4 et un fournisseur d'annonces 5.

Le centre de gestion de service 1 comprend en général un ordinateur, des interfaces, non représentés, pour communiquer avec les autres éléments, et éventuellement un serveur WEB. Le support de communication 2 comprend, d'une part, un moyen de diffusion d'annonce et, d'autre part, un moyen de communication avec le centre de gestion de service 1 et avec l'appareil de l'utilisateur 3, par exemple un élément d'émission/réception sans fil. L'appareil de l'utilisateur 3 sera généralement un combiné de téléphonie mobile, mais peut également être un organiseur, un ordinateur portable ou tout autre type d'appareil portable permettant une communication à distance et une entrée de données par de l'utilisateur qui le détient.

L'émetteur d'ordres d'annonce 4 et le fournisseur d'annonces 5 comprennent en général un ordinateur équipé des logiciels adéquats. L'émetteur d'ordres d'annonce 4 est apte à émettre un ordre d'annonce qui est reçu par le centre de gestion de service 1 sous forme de fichier électronique, par exemple au format XML. L'annonce correspondante est ensuite publiée par le support de communication 2, sur un support visuel par exemple. La publication de l'annonce peut être effectuée de façon manuelle si le support de communication 2 est un panneau d'affichage papier ou de façon automatique dans le cas d'un écran qui peut être commandé. Le centre de gestion de service 1 est relié au support de communication 2, à l'émetteur d'ordres d'annonce 4 et au fournisseur d'annonces 5 par une liaison de télécommunication, de type Internet ou autre.

Lorsque l'utilisateur, c'est-à-dire une personne susceptible d'être intéressée par l'annonce publiée et en contact sensoriel, en général visuel ou auditif, avec le support de communication 2, muni de son appareil 3, veut obtenir des informations complémentaires à celles de l'annonce, s'inscrire, poser une réservation, commander le produit ou le service sujet de l'annonce, ou plus généralement effectuer une action en réponse à l'annonce diffusée, il actionne l'appareil 3 qui émet un message de signalement qui est reçu par le support de communication 2, par exemple par une connexion hertzienne, par exemple par micro-ondes, notamment de type « Bluetooth ».

Ainsi, l'utilisateur ou l'utilisateur potentiel, qui repère une annonce diffusée qui suscite son intérêt, actionne son appareil 3, par exemple en tapant un code alpha-numérique simple qui peut être diffusé dans ou sur l'annonce, l'appareil 3 émettant alors un message de signalement MS. Le support de communication 2 reçoit le message de signalement MS et émet une requête d'identification RI destinée à être reçue par l'appareil 3. A réception de ladite requête d'identification RI, l'appareil 3 émet un message contenant un identifiant unique IUA dudit appareil.

A titre de variante, l'utilisateur peut également intégrer le support de communication 2 dans son « piconet ». Le support de communication 2, détectant son intégration dans le « piconet » de l'appareil 3, se fait alors transmettre par l'appareil 3 le message contenant l'identifiant unique IUA dudit appareil 3. Le support de communication 2 transmet alors au centre de gestion de service l'identifiant unique IUA de l'appareil 3, et un identifiant unique IUP du produit ou service désigné par l'annonce. Le centre de gestion de service 1 enregistre l'ensemble des données transmises par le support de communication 2 et peut, si nécessaire, envoyer, directement ou par l'intermédiaire du support de communication 2, un message complémentaire à l'appareil 3.

Lorsque l'utilisateur veut consulter l'information relative à l'annonce, en direct ou en différé, il peut le faire par exemple à partir d'un terminal mobile compatible WAP en envoyant un message court contenant l'identifiant unique IUP du produit ou service désigné par l'annonce, à partir de son ordinateur personnel, par exemple lorsqu'il rentre à son domicile, en utilisant une borne d'accès publique, etc. Il peut consulter le site correspondant à l'annonce dont l'adresse URL lui aura été préalablement communiquée par message court, courrier électronique, ou autres moyens.

Le centre de gestion de service 1 génère alors dynamiquement les pages correspondant à l'annonce sur son serveur WEB, et l'utilisateur accède aux informations complémentaires et/ou peut passer commande. Un retour automatique d'information peut être effectué vers l'émetteur d'ordre d'annonce 4 ou le fournisseur 5, si la demande en avait été faite lors de l'ordre de publication d'annonce. Ce retour d'information peut également être fait à l'initiative du fournisseur 5, qui effectue une consultation d'information disponible au centre de gestion de service 1.

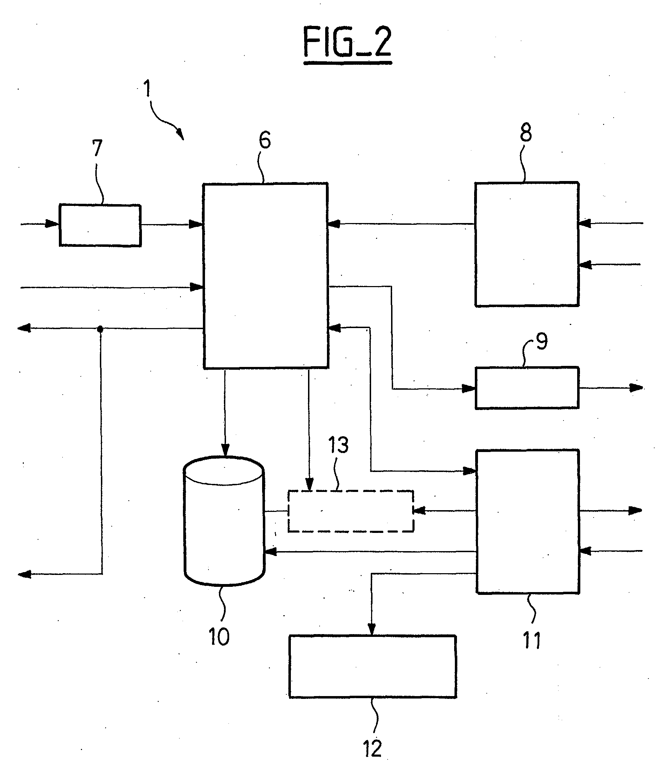

Sur la figure 2, est illustrée plus en détail l'architecture du centre de gestion de service 1 qui comprend un serveur de traitement 6, un serveur WEB 7, un serveur de multi-publication 8, une passerelle d'envoi de messages courts 9, une base de données 10, un serveur de gestion des supports 11, un générateur 12 d'identifiant IUP de produit ou service correspondant à une annonce et un serveur d'annonces 13. Le serveur d'annonces 13 a été représenté en pointillés, car sa fonction peut être assurée par la base de données 10, et sa présence est donc optionnelle. Les différents éléments du centre de gestion de service 1 peuvent être délocalisés ou co-localisés sur une même machine de traitement de l'information.

Des techniques de diffusion de contenu, de modification, d'enregistrement ou de filtrage de requête, d'évaluation de profil ou encore de localisation, peuvent être utilisées pour compléter cette architecture. Un centre de gestion de service 1 est prévu pour communiquer avec une pluralité de supports de communication 2, une pluralité d'émetteurs d'ordres d'annonce 4 et une pluralité de fournisseurs d'annonces 5. Les disponibilités des supports de communication 2 ainsi que les contraintes spécifiques de chaque type de support, sont stockées dans la base de données 10. L'ordre de publication d'annonce arrive en provenance de l'émetteur d'ordres d'annonce 4, directement sur le serveur de traitement 6 ou indirectement par l'intermédiaire du serveur WEB 7. Le serveur de traitement 6 effectue un référencement de l'annonce, puis stocke les différents éléments de l'annonce, y compris son contenu, dans la base de données 10.

En variante, le contenu peut également être stocké dans le serveur de contenu 13. Le serveur de traitement 6 interroge la base de données 10 pour connaître les disponibilités et les contraintes des supports de communication 2. A partir des informations reçues de la base de données 10, le serveur de traitement 6 établit un programme de communication ou de diffusion qui prévoit qu'une annonce donnée sera publiée sur des supports déterminés, à des heures déterminées, pendant une durée déterminée. Le programme de publication est ensuite stocké dans la base de données 10, puis le serveur de traitement 6 informe le serveur de gestion des supports 11 qu'un nouveau programme de publication est disponible. Le serveur de gestion des supports 11 interroge la base de données 10 pour connaître les différents programmes de publication.

Lorsqu'une annonce doit être transmise à un support de communication 2, le serveur de gestion des supports 11 demande au générateur d'identifiant unique 12 de générer un identifiant unique IUP de produit au service lié à l'annonce et de le lui transmettre. Le serveur de gestion des supports 11 transmet ensuite à chaque support de communication 2 le programme de communication en cours d'exécution, le contenu de l'annonce obtenu par consultation de la base de données 10 ou les serveurs de contenu 13, et l'identifiant unique IUP de produit au service associé à l'annonce obtenu préalablement auprès du générateur d'identifiant unique 12. L'identifiant unique IUP peut permettre d'identifier de façon unique le support et l'annonce. Dans ce cas, l'identifiant unique IUP contient un identifiant de support de communication et un identifiant d'annonce IAN. Sinon, l'identifiant unique IUP ne contient pas l'identifiant d'annonce IAN. Le serveur de gestion des supports 11 complète alors le programme de publication, en enregistrant dans la base de données 10 l'identifiant unique IUP généré et transmis au support de communication 2 concerné.

Lorsque l'appareil 3 d'un utilisateur ou utilisateur potentiel est détecté par un support de communication 2, l'information est transmise au serveur de gestion des supports 11 par le support de communication 2. Le serveur de gestion des supports 11 enregistre dans la base de données 10 un identifiant IAN de l'annonce repérée par de l'utilisateur associé à l'identifiant IUA de l'appareil 3 de l'utilisateur.

A des fins de statistique, on peut également enregistrer dans la base de données 10 la date et l'heure de repérage de l'annonce par l'utilisateur en la décorrélant de l'identifiant IUA de l'appareil 3, mais en y associant un profil d'utilisateur. On peut ainsi établir des statistiques en vue d'une optimisation des supports de communication 2.

Le serveur de gestion des supports 11 transmet également au serveur de traitement 6 un message indiquant que tel utilisateur s'est montré intéressé par telle annonce, en d'autres termes, l'identifiant IUA de l'appareil 3 de l'utilisateur et un identifiant IAN de l'annonce.

Au surplus, le serveur de traitement 6 peut décider de transmettre un message court, par exemple de type SMS, à l'appareil 3 de l'utilisateur par l'intermédiaire de la passerelle d'envoi de message court 9. Ce message court peut contenir des informations complémentaires et/ou un bon de commande ou de réservation du produit ou du service. En répondant au message reçu, l'utilisateur peut alors confirmer sa commande qui est transmise par le serveur de traitement 6 au fournisseur d'annonces 5. Le serveur de traitement 6 peut également attendre une connexion de l'utilisateur au serveur de multi-publication 8.

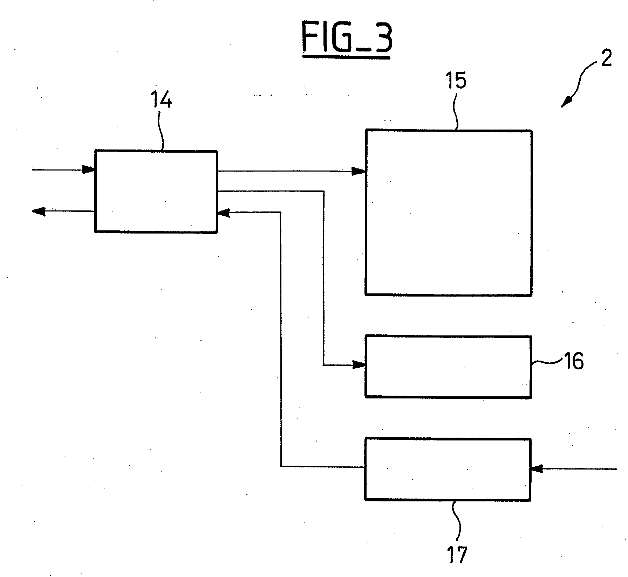

Sur la figure 3, est illustré un exemple d'architecture du support de communication 2. Toutefois, le support de communication 2 peut présenter une architecture plus simple.

Le support de communication 2 comprend une interface 14 avec le centre de gestion de service 1, un module de restitution d'annonce 15, un module de restitution de code 16 et une interface 17 avec l'appareil 3 de l'utilisateur. Ces différents éléments sont reliés par une liaison de communication, filaire ou hertzienne. L'annonce, qui peut être de type multimedia ou plus simplement textuelle et l'identifiant IAN correspondant, sont transmis par le centre de gestion de service et reçus par l'interface 14. Selon ses capacités de mémorisation, l'interface 14 peut mémoriser l'identifiant IAN, le contenu de l'annonce, le couple date-heure et la durée de diffusion, pour une période donnée. Ensuite, l'interface 14 envoie l'annonce sur le module de restitution de l'annonce et l'identifiant IAN sur le module de restitution du code 16. Le module de restitution d'annonce 15 et le module de restitution de code 16 sont aptes à effectuer la restitution des informations reçues vers les utilisateurs ou utilisateurs potentiels.

Lorsqu'un utilisateur intéressé est détecté par l'intermédiaire de son appareil 3, l'information est captée par l'interface 17 et l'identifiant IUA d'appareil 3 est transmis à l'interface 14. L'interface 14 retransmet alors l'ensemble des informations (identifiant IUA d'appareil 3, identifiant IAN, date-heure) au centre de gestion de service 1. En cas de rupture de communication entre le centre de gestion de service 1 et le support de communication 2, l'interface 14 stoppe les informations jusqu'au rétablissement de la communication. A cet effet, l'interface 14 est préférablement équipé d'une capacité mémoire significative. Le module de restitution de l'annonce 15 peut se présenter sous la forme d'un écran d'affichage. L'interface 17 comprendra en général une antenne d'émission-réception pour établir une communication à distance avec l'appareil 3 de l'utilisateur et une unité de traitement.

Dans une variante simplifiée, le module de restitution de l'annonce peut être un panneau destiné à recevoir une affiche en papier et dépourvu de lien avec l'interface 14. Le module de restitution du code 16 peut être une mémoire dans laquelle est stocké l'identifiant IAN. L'interface 17 peut être prévu pour transmettre à l'appareil 3 de l'utilisateur l'adresse URL correspondant au produit ou service de l'annonce.

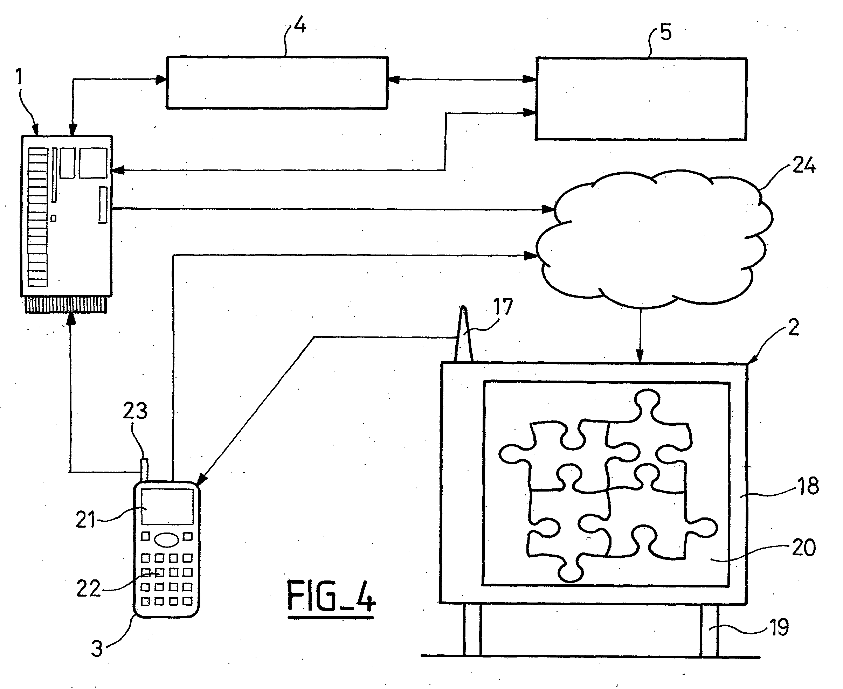

Sur la figure 4, est illustrée une version particulière du système de gestion dynamique de support, dans lequel le panneau 2 est un écran d'affichage public de grande dimension comprenant un bâti 18 reposant sur le sol par l'intermédiaire de pieds 19 et possédant un écran multimédia 20.

L'appareil 3 de l'utilisateur ou l'utilisateur potentiel est un combiné de téléphonie mobile comprenant un écran 21, un clavier 22, une antenne 23 et, de façon non représentée, des moyens de traitement adéquats comprenant notamment une portion logicielle lui permettant d'exécuter le procédé de gestion dynamique selon l'invention et de communiquer avec le centre de gestion de service 1 et l'interface 17 du support de communication 2.

On a également représenté sur la figure 4 un réseau de communication 24, par exemple du type Internet, qui peut permettre d'effectuer une liaison entre le centre de gestion de service 1 et le support de communication 2 lors de l'envoi de l'annonce avec l'identifiant IAN et lors de l'envoi de l'adresse WEB correspondant à l'annonce par le centre de gestion de service 1. L'interface 17 peut alors adresser à l'appareil 3 l'adresse WEB, par exemple sous la forme d'une adresse URL, du site correspondant à l'annonce qui a suscité l'intérêt de l'utilisateur de l'appareil 3.

On peut également prévoir que le centre de gestion de service est apte à mettre l'appareil 3 en communication avec un centre d'appel du fournisseur 5 ou avec un site Internet du même fournisseur 5.

L'invention permet donc une interactivité entre une annonce, par exemple une annonce publicitaire affichée sur un panneau à écran et une personne intéressée par ladite annonce. Les modes de diffusion de l'annonce peuvent être de type notamment visuel ou auditif. Dès que l'utilisateur a marqué son intérêt pour l'annonce par l'intermédiaire d'un appareil qu'il a à sa disposition, il peut alors recevoir une adresse d'un site WEB, un appel téléphonique, un message relatif à l'annonce, etc.

L'invention présente donc un intérêt important pour le utilisateur ou utilisateur potentiel, qui peut se signaler auprès du fournisseur de façon immédiate et sans avoir à faire un effort de mémoire ou à prendre en note une information.

L'invention est également intéressante pour le diffuseur et l'annonceur avec un excellent retour d'information sur l'effet d'une campagne de publicité, le repérage des supports de communication, notamment des panneaux publicitaires qui suscitent le plus de réaction de la clientèle et la possibilité d'obtenir des statistiques permettant une adaptation des supports de communication, en particulier de leur localisation en fonction de la nature de l'annonce ou du fournisseur.

## Revendications

1. Système de gestion dynamique de supports de relations avec une clientèle, comprenant au moins une annonce, un appareil (3) dont dispose un utilisateur de façon que s'il est intéressé par l'annonce ou par son contenu, ledit utilisateur actionne ledit appareil pour marquer son intérêt, ledit appareil (3) étant apte à émettre un message de signalement MS, et un dispositif de gestion apte à communiquer avec l'appareil de l'utilisateur pour transmettre audit appareil une adresse correspondant à ladite annonce à réception du message de signalement MS.

2. Système selon la revendication 1, **caractérisé par le fait que** le dispositif de gestion comprend un élément d'émission/réception (2) associé à l'annonce et apte à communiquer avec l'appareil de l'utilisateur et un centre de gestion (1) relié à l'élément d'émi ssion/réception.

3. Système selon la revendication 2, **caractérisé par le fait que** l'élément d'émission/réception comprend un moyen pour recevoir un message de signalement MS émis par l'appareil de l'utilisateur, un moyen pour émettre un message contenant une requête d'identification de l'appareil de l'utilisateur, et un moyen pour recevoir un message d'identification émis par l'appareil de l'utilisateur.

4. Système selon la revendication 3, **caractérisé par le fait que** l'élément d'émission/réception comprend un moyen pour émettre un message contenant un identifiant de l'annonce et un identifiant d'un support de l'annonce.

5. Système selon l'une quelconque des revendications 2 à 4, **caractérisé par le fait que** l'élément d'émission/réception comprend un moyen pour commander un support d'annonce (20) et afficher une annonce déterminée.

6. Système selon l'une quelconque des revendications 2 à 5, **caractérisé par le fait que** le centre de gestion (1) comprend un moyen pour recevoir un message émis par l'élément d'émission/réception contenant un identifiant de l'appareil de l'utilisateur et un identifiant de l'annonce, et un moyen pour envoyer à l'appareil de l'utilisateur un message relatif à l'annonce.

7. Système selon la revendication 6, **caractérisé par le fait que** le centre de gestion comprend un moyen de gestion (11) de campagnes de publication d'annonces.

8. Système selon la revendication 6 ou 7, **caractérisé par le fait que** le centre de gestion comprend un moyen de commande d'une pluralité d'éléments d'émission/réception.

9. Procédé de gestion dynamique de supports de relations avec une clientèle, dans lequel :
- un utilisateur intéressé par une annonce ou par son contenu actionne un appareil dont il dispose, pour marquer son intérêt ;
- ledit appareil émet un message de signalement MS ;
- à réception du message de signalement MS, un dispositif de gestion d'annonce transmet à l'appareil de l'utilisateur l'adresse du site correspondant à ladite annonce.

10. Procédé selon la revendication 9, dans lequel ledit utilisateur intègre ledit dispositif de gestion dans le "piconet" de son appareil, ledit dispositif de gestion détecte son intégration dans le "piconet" de l'appareil de l'utilisateur et se fait transmettre un identifiant dudit appareil.

11. Procédé selon la revendication 9 ou 10, dans lequel suite à son actionnement ledit appareil de l'utilisateur émet un message, ledit message est reçu par le dispositif de gestion, le dispositif de gestion émet un message contenant une requête d'identification RI, et à réception dudit message, l'appareil de l'utilisateur émet un message contenant un identifiant IUA.

12. Procédé selon la revendication 11, dans lequel le dispositif de gestion reçoit ledit identifiant IUA et l'associe à un identifiant IAN de l'annonce.

13. Procédé selon la revendication 12, dans lequel le dispositif de gestion émet à destination de l'appareil de l'utilisateur un message contenant l'adresse d'un site correspondant à ladite annonce.
